# EUROPEAN PATENT APPLICATION

(11) **EP 2 549 263 A2**
(43) Date of publication of application: **23.01.2013**
(21) Application number: 12005222.0
(22) Date of filing: 16.07.2012
(51) Int. Cl.: G01N 19/04

(54) **A qualitiy control method of an adhesive union of composite laminates**

(30) Priority: 21.07.2011 ES 201100832
(71) Applicant: Gamesa Innovation & Technology, S.L., 31621 Sarriguren (Navarra) (ES)
(72) Inventor: Vahnoveanu Stratula, Brindusa, Mariana, 31621 Sarriguren (Navarra) (ES); Berlanga Labari, Carlos, 31006 Pamplona (ES); Azcona Largo, Marta, 31621 Sarriguren (Navarra) (ES)

(57) **Abstract**

A testing method for determining the shear strength of an adhesive union of the first and second components (45, 49) a product such as a wind turbine blade, their thickness being greater than 3 mm and the thickness of the adhesive layer (47) being comprised between 0,1-15 mm, comprising steps of: a) preparing rectangular test specimens (44) of predetermined dimensions; with first and second transversal notches (51, 55) of a predetermined width, placed respectively, at each side of the transversal symmetry axis (50) of said test specimens (44) at predetermined distance D1 of it from its inner borders; b) subjecting said test specimens (44) to equal tensile forces F applied at a predetermined distance D2 of the outer borders of said notches (51, 55). The invention also refers to a method for controlling the quality of an adhesive union of a product such as a wind turbine blade.

## Description

### FIELD OF THE INVENTION

The present invention refers to a quality control method of an adhesive union of composite laminates and more in particular to a quality control method of an adhesive union of components of a wind turbine blade.

### BACKGROUND OF THE INVENTION

Wind turbines include a rotor that supports a number of blades extending radially therefrom for capturing the kinetic energy of the wind and causing a rotational motion of a driving train coupled to an electric generator for producing electrical power.

The amount of energy produced by wind turbines is dependent on the rotor blade sweeping surface that receives the action from the wind and consequently increasing the length of the blades leads normally to an increase of the power output of the wind turbine.

A well known method of manufacturing wind turbine blades is manufacturing separately their main components (upper and lower shells and spar) and bonding the blade components by means, mainly, of an adhesive bonding.

The current trend to wind turbines with large blades (60 m or more) implies the division of the blade in two or more longitudinal sections and even the division of each of them in several parts. This trend increases the number of adhesive unions in wind turbine blades.

The typical technique for the application of the adhesive material in the surfaces of the components of wind turbine blades is distributing the adhesive material from a container to which is pumped from a mixing machine in which the dosage of the components of the adhesive material is made and controlled.

This process has several drawbacks: it requires very demanding application times, the workers who perform the operation need protective equipment and a correct application on the bonding surface is difficult and may involve the use of an excess of adhesive and therefore an increase of weight and cost.

On the other hand, the working conditions of a wind turbine blade may cause unexpected variations of the properties of the adhesive unions between its components.

There is therefore a strong need of quality control methods of the adhesive unions of wind turbine blade components because the features of the adhesive unions between those components may differ from their designed features particularly with respect to the shear strength of said unions.

This need is extensive to similar adhesive unions between components of other products made of composite materials, typically Carbon Fibre Reinforced Plastic (CFRP) and/or Glass Fiber Reinforced Plastic (GFRP).

There is not known any standard method for determining the shear strength of such adhesive unions, ASTM 3165 describes a standard test method for strength properties of adhesives in shear by tension loading of single-lap-join laminated assemblies which is not applicable to wind turbine blade adhesive unions.

The present invention is intended to satisfy said demand.

### SUMMARY OF THE INVENTION

An object of the present invention is to provide a testing method for determining the shear strength of adhesive unions such as the adhesive unions of wind turbine blades.

Another object of the present invention is to provide a quality control method of products such as wind turbine blades having adhesive unions.

In one aspect, these and another objects are met by a testing method for determining the shear strength of an adhesive union of first and second components of a product, made at least in part of composite materials, the thickness of the adhesive layer disposed between said first and second components being comprised between 0,1-15 mm, the thickness of each of said first and second components being greater than 3 mm, comprising steps of: a) preparing rectangular test specimens of said adhesive union having a length L comprised between 130-230 mm and a width W comprised between 20-30 mm, with first and second transversal notches in said first and second components of a width A comprised between 1-5 mm (preferably between 3-5 mm) placed, respectively, at each side of the transversal symmetry axis of said test specimens at a distance D1 of it from its inner borders comprised between 5-15 mm (preferably 5-10 mm); b) subjecting said test specimens to equal tensile forces F on the direction of its longitudinal axis, being comprised the distance D2 between the application areas of said tensile forces F and the outer borders of said notches between 1-10 mm (preferably 3-7 mm).

In embodiments of the invention said testing method is applicable to adhesive unions of components of a wind turbine blade such as the adhesive unions of the upper shell with the lower shell, the adhesive unions of any of the shells with the spar or the adhesive unions of the panels of the spar. Hereby it is achieved a testing method of the shear strength of an adhesive union adapted to the features of the adhesive unions of wind turbine blades.

In another aspect, the above mentioned objects are met by a test specimen for carrying out shear strength tests of an adhesive union of first and second components of a wind turbine blade formed by a prismatic body with all the components conforming the adhesive union having a rectangular plant with a length L comprised between 130-230 mm and a width W comprised between 20-30 mm and comprising first and second transversal notches in said first and second components of a width A comprised between 1-5 mm (preferably 3-5 mm) placed, respectively, at each side of the transversal symmetry axis of said test specimen at a distance D1 of it from its inner border comprised between 5-15 mm (preferably 5-10 mm). Hereby it is achieved a suitable standard test specimen for carrying out shear strength tests of the adhesive unions of a wind turbine blade at any time needed.

In another aspect, the above mentioned objects are met by a method for controlling the quality of an adhesive union of first and second components of a product, made of at least in part a composite material, the thickness of the adhesive layer disposed between said first and second components being comprised between 0,1-15 mm, the thickness of each of said first and second components being greater than 3 mm, comprising steps of; a) performing the above mentioned testing method to test specimens prepared under laboratory conditions: b) performing the above mentioned testing method to test specimens extracted from the product; c) comparing the shear strength of the adhesive union determined in said steps a) and b).

In embodiments of the invention said quality control method is used for controlling the quality of the adhesive unions of components of a wind turbine blade such as the adhesive unions of the upper shell with the lower shell, the adhesive unions of any of the shells with the spar or the adhesive unions of the panels of the spar. Hereby it is achieved a quality control method that allows evaluating the real behaviour of the adhesive unions of wind turbine blades along its lifetime.

Other characteristics and advantages of the present invention will be clear from the following detailed description of embodiments illustrative of its object in relation to the attached figures.

### DESCRIPTION OF THE DRAWINGS

Figure 1a shows in a schematic perspective view the main components of the inboard module of a wind turbine blade split in two modules.
Figure 1b shows in a schematic perspective view the main components of the spar of said inboard module.
Figure 2 is a cross-sectional view of said inboard module.
Figures 3a and 3b are schematic plan and cross section views of a test specimen for a testing method of the shear strength of an adhesive union according to the present invention.
Figure 4a is a schematic view of the application of tensile forces F to the test specimen in the method of testing the shear strength of an adhesive union according to the present invention.

### DETAILED DESCRIPTION OF THE INVENTION

We will describe in detail the invention with respect to a wind turbine blade and, particularly, to a multi-panel blade where it is very important that the adhesive unions of the various components are properly conducted to ensure a suitable shear strength for the lifetime of the blade. As is well known these components are currently manufactured using composite materials, basically Glass Fiber Reinforced Plastic (GFRP) and Carbon Fiber Reinforced Plastic (CFRP).

The invention is equally applicable to any product with similar adhesive unions of components made of composite materials.

In a multi-panel wind turbine blade, the whole blade may be split into, for example, an outboard and an inboard modules and each of them in several prefabricated parts for an assembly on site or in a factory.

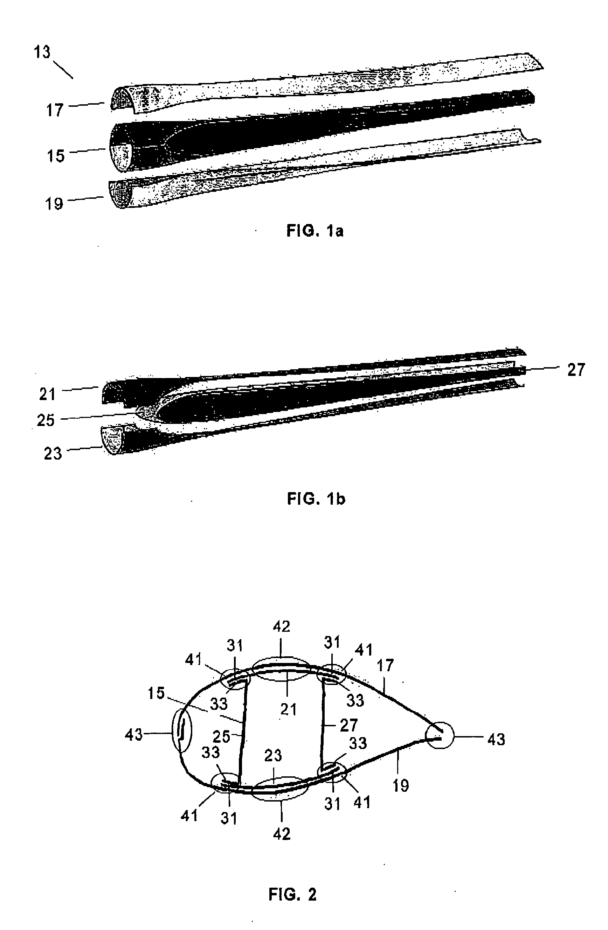

As illustrated in Figures 1a, 1b and 2 the inboard module 13 of the blade may be formed by upper and lower shells 17, 19 and an spar 15 that may also be formed by an upper cap 21, a lower cap 23, a leading edge web 25 and a trailing edge web 27.

All those spar single components are prefabricated and then assembled bonding the flanges 31, 33 of said components.

In a further step the inboard module is assembled bonding the prefabricated upper and lower shells 17, 19 to the spar 15 and bonding the borders of the upper and lower shells 17, 19.

In this inboard module (and similarly in wind turbine blades not divided in modules) there are therefore three different union areas: the union areas 41 in the flanges 31, 33 of the spar components, the union areas 42 between the spar caps 21, 23 and, respectively, the upper and lower shells 17, 19 and the union areas 43 between the borders of the upper and lower shells 17, 19.

In said union areas 41, 42, 43 the thickness of the laminates may be comprised between 3-40 mm. For instance, in the case of the trailing edge of one of the shells (where a union area 43 with the other shell takes place) the thickness of the laminate may be comprised between 3-4 mm while in the case of an spar cap (where a union area 42 with one shell takes place) the thickness of the laminate may reach 40 mm.

On the other hand, the thickness of the adhesive layer in said union areas 41, 42, 43 may be comprised between 0.1-15 mm (preferably between 2-15 mm in many of the union areas of the blade).

These adhesive unions are therefore quite different from those that are the subject of, for example, ASTM 3165.

In this type of adhesive unions it is considered that the shear strength is the most important parameter to measure the adhesion of the adhesive being used. Among the factors involved to ensure a good union with a particular adhesive material the following shall be cited:
- The correct dosage of the adhesive material;
- The thickness of the adhesive material;
- Time spent in the application of adhesive;
- Environmental conditions during the application of the adhesive.

The method of quality control of adhesive unions of wind turbine blades according to the present invention is based on comparing the shear strength of a particular adhesive union of a blade at any time after the manufacture of the blade with the shear strength expected. That way relevant information about the actual behaviour of the adhesive union can be obtained for understanding the causes that can motivate any faults with it.

This requires, on the one hand, obtaining test specimens of wind turbine blades at any time after its manufacture and particularly when a failure is observed in some adhesive unions, and test specimens of the adhesive union in question at laboratory conditions and, on the other hand, the definition of a method for testing the shear strength of these test specimens because of the inapplicability of the standard methods known, particularly in regard to the characteristics of the test specimens.

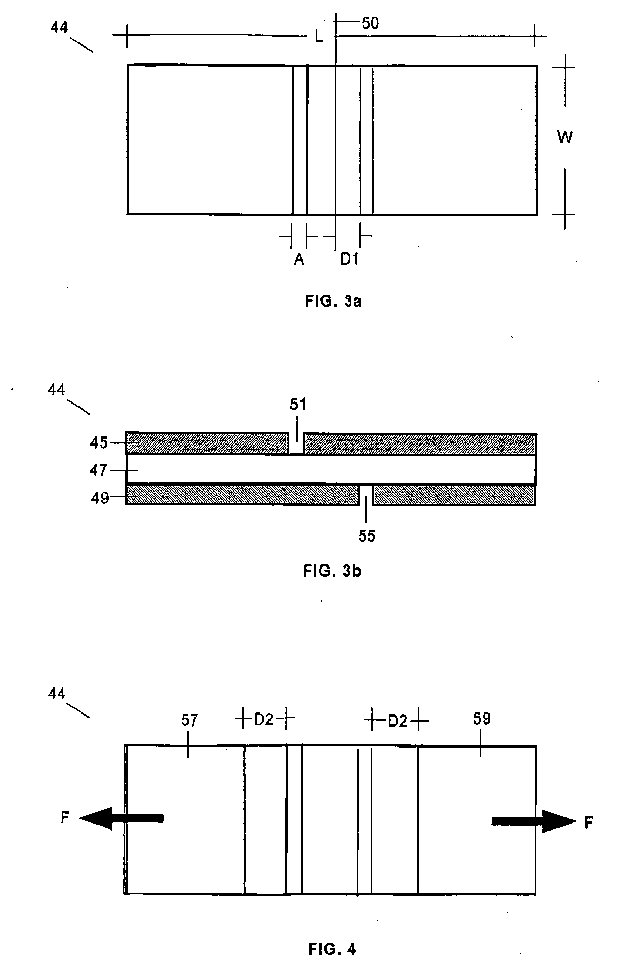

According to the invention these characteristics are the following (see Figures 3a and 3b):
- Test specimens 44 of an adhesive union comprising a first component 45, a second component 49 and an adhesive layer 47 between them;
- Tests specimens 44 of rectangular plant with a length L comprised between 130-230 mm and a width W comprised between 20-30 mm;
- Test specimens 44 with first and second transversal notches 51, 55 in said first and second components 45, 49 of a width A comprised between 1-5 mm (preferably 3-5 mm) placed, respectively, at each side of the transversal symmetry axis 50 of said test specimens 44 at a distance D1 of it from its inner border comprised between 5-15 mm (preferably 5-10 mm).

As for the shear strength testing method the only peculiarity of the testing method of the present invention is that (see Figure 4) each testing specimen 44 is subjected to tensile forces F applied over the application areas 57, 59 at a distance D2 of the outer edges of said transversal notches 51, 55 comprised between 1-10 mm (preferably 3-7 mm).

In the case of the test specimens extracted from the manufactured blades, a piece of blade of dimensions greater than those of the test specimen will be firstly extracted from the blade and secondly the specimen with the specified dimensions will be obtained from that piece.

In the case of the test specimens obtained in laboratory conditions the components of the adhesive union in question will be normally used and they will be bonded with the adhesive material under the conditions specified for the adhesive union so that the shear strength of these test specimens be shear strength specified for the adhesive union.

As the skilled man will readily understand, in all other aspects of the testing method (number of specimens to be tested to draw conclusions about the quality of the adhesive bond in question, conditions of conducting the tests, etc) the usual criteria for this type of testing methods will be followed.

Although the present invention has been fully described in connection with preferred embodiments, it is evident that modifications may be introduced within the scope thereof, not considering this as limited by these embodiments, but by the contents of the following claims.

## Claims

1. A testing method for determining the shear strength of an adhesive union of first and second components (45, 49) of a product, made at least in part with composite materials, the thickness of the adhesive layer (47) disposed between said first and second components (45, 49) being comprised between 0,1-15 mm, the thickness of each of said first and second components (45, 49) being greater than 3 mm, comprising steps of:
a) preparing rectangular test specimens (44) of said adhesive union:
- having a length L comprised between 130-230 mm and a width W comprised between 20-30 mm;
- with first and second transversal notches (51, 55) in said first and second components (45, 49) of a width A comprised between 1-5 mm placed, respectively, at each side of the transversal symmetry axis (50) of the test specimens (44) at a distance D1 of it from its inner borders comprised between 5-15 mm;
b) subjecting said test specimens (44) to equal tensile forces F on the direction of its longitudinal axis, being comprised the distance D2 between the application areas (57, 59) of said tensile forces F and the outer borders of said notches (51, 55) between 1-10 mm.

2. A testing method according to claim 1, wherein:
- the width A of said first and second transversal notches (51, 55) is comprised between 3-5 mm;
- said distance D1 is comprised between 5-10 mm;
- said distance D2 is comprised between 3-7 mm.

3. A testing method according to any of claims 1-2, wherein said product is a wind turbine blade comprising an upper shell, a lower shell and a spar.

4. A testing method according to claim 3, wherein said first component (45) is the upper shell and said second component (49) is the lower shell.

5. A testing method according to claim 3, wherein said first component (45) is the upper shell or the lower shell and said second component (49) is the spar.

6. A testing method according to claim 3, wherein said first and second components (45, 49) are panels of the spar.

7. A test specimen (44) for carrying out shear strength tests of an adhesive union of first and second components (45, 49) of a wind turbine blade formed by a prismatic body with all the components conforming the adhesive union having a rectangular plant with a length L comprised between 130-230 mm and a width W comprised between 20-30 mm and comprising first and second transversal notches (51, 55) in said first and second components (45, 49) of a width A comprised between 1-5 mm placed, respectively, at each side of the transversal symmetry axis (50) of the test specimen at a distance D1 of it from its inner borders comprised between 5-15 mm.

8. A test specimen (44) according to claim 7, wherein:
- the width A of said first and second transversal notches (51, 55) is comprised between 3-5 mm;
- said distance D1 is comprised between 5-10 mm.

9. A method for controlling the quality of an adhesive union of first and second components (45, 49) of a product, made at least in part of composite materials, the thickness of the adhesive layer (47) disposed between said first and second components (45, 49) being comprised between 0,1-15 mm, the thickness of each of said first and second components (45, 49) being greater than 3 mm, comprising steps of:
a) performing a testing method according to any of claims 1-2 to test specimens (44) prepared under laboratory conditions;
b) performing a testing method according to any of claims 1-2 to test specimens (44) extracted from the product;
c) comparing the shear strength of the adhesive union determined in said steps a) and b).

10. A method according to claim 9, wherein said product is a wind turbine blade comprising an upper shell, a lower shell and a spar.

11. A method according to claim 10, wherein said first component (45) is the upper shell and said second component (49) is the lower shell.

12. A method according to claim 10, wherein said first component (45) is the upper shell or the lower shell and said second component (49) is the spar.

13. A method according to claim 10, wherein said first and second components (45, 49) are panels of the spar.
